Europäisches Patentamt

European Patent Office

Office européen des brevets

(11) Veröffentlichungsnummer: **0 244 736**

**A2**

(12) # EUROPÄISCHE PATENTANMELDUNG

(21) Anmeldenummer: **87106137.0**

(22) Anmeldetag: **28.04.87**

(51) Int. Cl.⁴: **G01L 9/14**

(30) Priorität: **05.05.86 DE 8612317 U**

(43) Veröffentlichungstag der Anmeldung:
**11.11.87 Patentblatt 87/46**

(84) Benannte Vertragsstaaten:
**AT BE CH DE ES FR GB GR IT LI LU NL SE**

(71) Anmelder: **KMK-Sensortechnik GmbH & Co.**
**Postfach 12 52 Seehaupter Strasse 58**
**D-8122 Penzberg(DE)**

(72) Erfinder: **Kunz, Manfred, Dipl.-Kaufmann**
**Am Wiesengang 4**
**D-8121 Aidenried(DE)**
Erfinder: **Binder, Josef, Dr.rer.nat.**
**Staltacher Strasse 12 b**
**D-8127 Iffeldorf(DE)**

(74) Vertreter: **Säger, Manfred, Dipl.-Ing. et al**
**Patentanwälte Dipl.-Ing. Otto Flügel Dipl.-Ing.**
**Manfred Säger Postfach 810540**
**D-8000 München 81(DE)**

(54) **Druckaufnehmer.**

(57) Der Druckaufnehmer ist mit einem metallischen Gehäuse versehen, das einen abgeschlossenen Druckraum (7) mit einer diesem vom Außenbereich abtrennenden und dessen Druck aufnehmenden Membran (8). Ferner sind in dem Druckraum dem Druck ausgesetzte Sensoren angeordnet, die über in den Druckraum über Durchführungen, gegebenenfalls druckdicht und elektrisch isoliert hingeführte Anschlüsse an eine Auswertschaltung anschließbar sind. Hierbei ist an der Membranart ein im Druckraum (7) befindlicher Stabmagnet angeordnet und sind zumindest zwei Sensoren (l0) vorgesehen, von denen jede als Hallelement (l0) mit einer aktiven Ebene ausgebildet ist sowie mit Spiel bis an den Stabmagneten (l5) reicht. Die Hallelemente (l0) sind in Differentialschaltung hintereinander angeordnet

EP 0 244 736 A2

## DRUCKAUFNEHMER

Die Erfindung betrifft einen Druckaufnehmer gemäß dem Oberbegriff des Hauptanspruchs.

Solche Druckaufnehmer sind bekannt (Prospekt KMK, Sensoren und Meßwert-Verarbeitungssysteme für die Industrie). Sie besitzen ein aus Edelstahl bestehendes metallisches Gehäuse in Form eines mit einem Außengewinde und einem Sechskant versehenen Einschraubbolzens, an dessen Vorderseite die Membran des mit einem Fluid gefüllten Druckraums angebracht ist, in welchem als Sensor der Drucksensorchip angeordnet ist. Dieser ist in dem abgeschlossenen Druckraum mittels elektrisch über Glas isoliert hineingeführter Anschlüsse an die im rückwärtigen (äußeren) Teil des Drucksensors angeordnete Auswertschaltung angeschlossen, wobei der Drucksensorchip auf einem Sockel angeordnet ist, wodurch zur Füllung des Druckraums vergleichsweise viel Fluid erforderlich ist.

Abgesehen davon, daß schon die Herstellung der elektrischen Glasisolation für die Anschlüsse aufwendig ist und zu einem hohen Ausschuß der teuren Gehäuse aus Edelstahl führt, gilt dies um so mehr für den die elektrische Auswerteschaltung für den Drucksensor umfassenden Druckaufnehmer, der im fertigen Zustand erst auf Funktionstüchtigkeit geprüft wird. Hinzukommen die Arbeitsgänge, daß der Druckraum evakuiert und danach mit dem Fluid gefüllt wird. Daher sind die bekannten Druckaufnehmer teuer herstellbar und insbesondere bei größeren Genauigkeiten schwer justierbar.

Der Erfindung liegt die Aufgabe zugrunde, einen einfach justierbaren Druckaufnehmer gemäß dem oberbegriff des Hauptanspruchs mit ausreichender Genauigkeit, der auch einfach herstellbar ist, vorzuschlagen. Diese Aufgabe wird bei einem Druckaufnehmer gemäß dem Oberbegriff des Hauptanßpruchs erfndungsgemäß durch dessen kennzeichnende Merkmale gelöst. So wird durch die Anordnung der zwei Hallelemente in Differentialschaltung, d.h. in Serienschaltung und Anordnung beiderseits, vorzugsweise diametral bezüglich des Stabmagneten wird erreicht, daß ein erhöhtes Ausgangssignal erhalten wird. Durch diese Anordnung ist ferner sichergestellt, daß bei nicht konstantem Abstand des Stabmagneten zum Hallgenerator beim Schwingen der Membran die Hallelemente unterschiedlich hohe Spannungen abgeben, dieser mechanische Parallaxenfehler also durch die Serienschaltung quasi kompensiert wird. Die Hallelemente befinden sich hierbei vorzugsweise in gleicher Höhe und das Stabelement symmetrisch zu ihnen, so daß sich beim Ausrücken des Magneten aus dieser Lage beim Schwingen der Trennmembran ein etwa linearer Ausgangsspannungsverlauf der Gesamtschaltung ergibt. Im übrigen befindet sich im Druckraum Luft, so daß es einer Füllung mit Fluid und des Evakuierens nicht bedarf.

In vorteilhafterAusgestaltung ist der Stabmagnet über ein unmagnetisches Zwischenstück an der Membran angebracht und die Trägerplatte mit den Hallelementen in den Druckaufnehmer einschraubbar. Infolge dieser Einschraubbarkeit vorzugsweise mit einem Feingewinde ist ein einfacher und problemloser Abgleich des Nullpunktes (Mittenlage des Stabmagneten bezüglich der beiden Hallelemente) erzielbar.

Bei einer bevorzugten Ausführungsform sind die Pole des Stabmagneten (15) senkrecht zur Schwingrichtung (16) und die Hallelemente senkrecht zur Verlängerung des Stabmagneten auf dessen einer Seite sowie in Schwingrichtung hintereinander angeordnet. Die aktive Flächen der Hallelemente liegen in einer gemeinsamen Ebene, die parallel zur Schwingrichtung und senkrecht zur Erstreckung des Stabmagneten verläuft.

Ferner ist die Membran als dicke Scheibe aus Aluminium oder Edelstahl mit einem kreisringförmig ausgesparten dünnen und die eigentliche Membrane bildenden Bereich ausgestaltet.

Zweckmäßige Ausgestaltungen und Weiterbildungen der Erfindung sind in den Unteransprüchen gekennzeichnet.

Ein bevorzugtes Ausführungsbeispiel wird nachfolgend unter Bezugnahme auf die Zeichnung näher erläutert. In dieser zeigt:

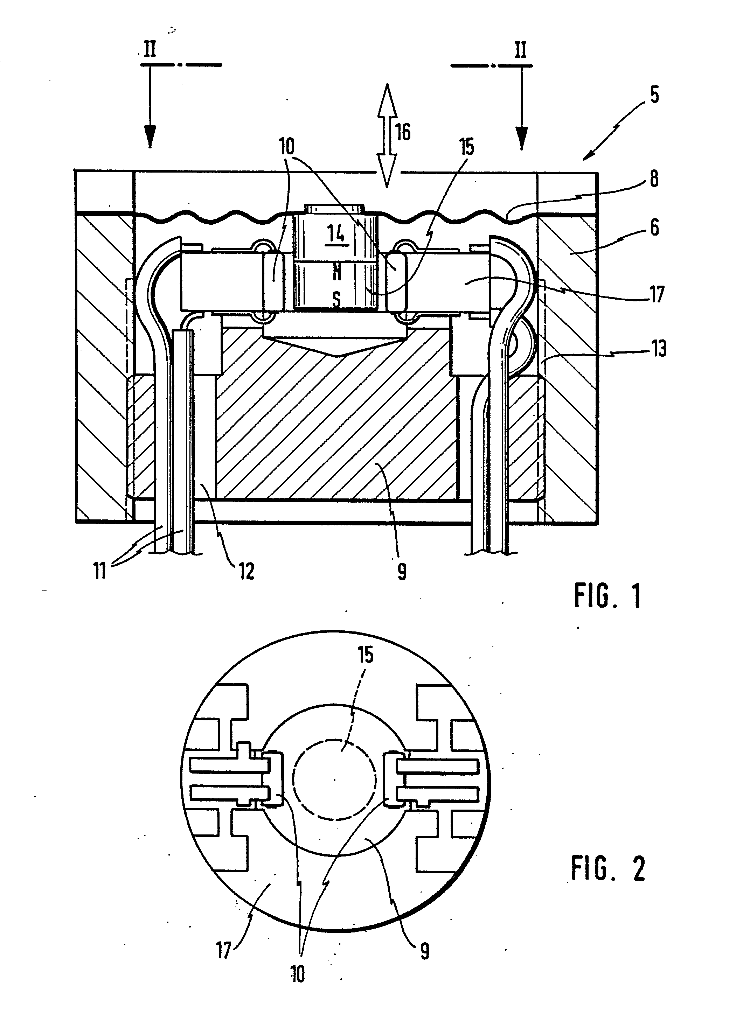

Figur 1 einen Druckaufnehmer im schematischen Querschnitt;

Figur 2 eine Draufsicht II-II gemäß Fig. 1, mit abgenommener Membran;

Figur 3 eine zweite Ausführungsform eines Druckaufnehmers im schematischen Querschnitt, und

Figur 4 die Anordnung des Magneten und der Hallelemente in perspektivischer Darstellung

Der insgesamt mit 5 bezeichnete Druckaufnehmer weist ein metallisches Gehäuse 6 auf, mit einem abgeschlossenen Druckraum 7, der mittels einer Membran 8 abgeschlossen ist.

In dem Druckraum 7 ist eine insgesamt mit 9 bezeichnete Trägerplatte vorgesehen, die auf ihrer der Membran 8 zugewandten Seite ein als Isolator ausgebildetes Trägerteil als Hohlzylinderabschnitt 17 aufweist, auf dessen innerem Mantel zwei Hallelemente 10 so angeordnet sind, daß deren aktive Ebenen parallel zur Schwingungsrichtung 16 verlaufen und einander zugewandt sind. Die Anschlüsse 11 der Hallelemente 10 sind über eine Durchführung

12 druckdicht und elektrisch isoliert hineingeführt und an eine - nicht gezeigte - elektrische Auswertschaltung anschließbar. Das metallische Gehäuse 6 ist ferner mit einem innenliegenden Feingewinde 13 versehen, in das die Trägerplatte 9, die mit einem entsprechenden Außengewinde versehen ist, einschraubbar ist. An der Membran 8 ist in dem Druckraum 7 etwa zentrisch über ein unmagnetisches Zwischenstück 14 ein Stabmagnet 15 angeordnet, dessen beide Pole in linear in Schwingrichtung 16 der Membran 8 angeordnet sind. Ferner ist der Stabmagnet 15 symmetrisch bezüglich der beiden gleich hoch angeordneten Hallelemente 10 und symmetrisch zu deren horizontalen Mittelebene angeordnet. Der Stabmagnet 15 ist als senkrechter Kreiszylinder ausgebildet und die beiden Hallelemente sind diametral einander gegenüberliegend mit Spiel zum Mantel des Stabmagneten 15 angeordnet.

Die beiden Hallelemente 10 sind elektrisch hintereinander in Differentialschaltung angeordnet.

Fig. 2 zeigt eine Draufsicht auf die Trägerplatte 9 gemäß Ansicht II-II in Fig. I. Schematisch mit 15 ist der Stabmagnet bezeichnet. Mit Spiel zu diesem reichen die beiden Hallelemente 10 auf der Trägerplatte 9.

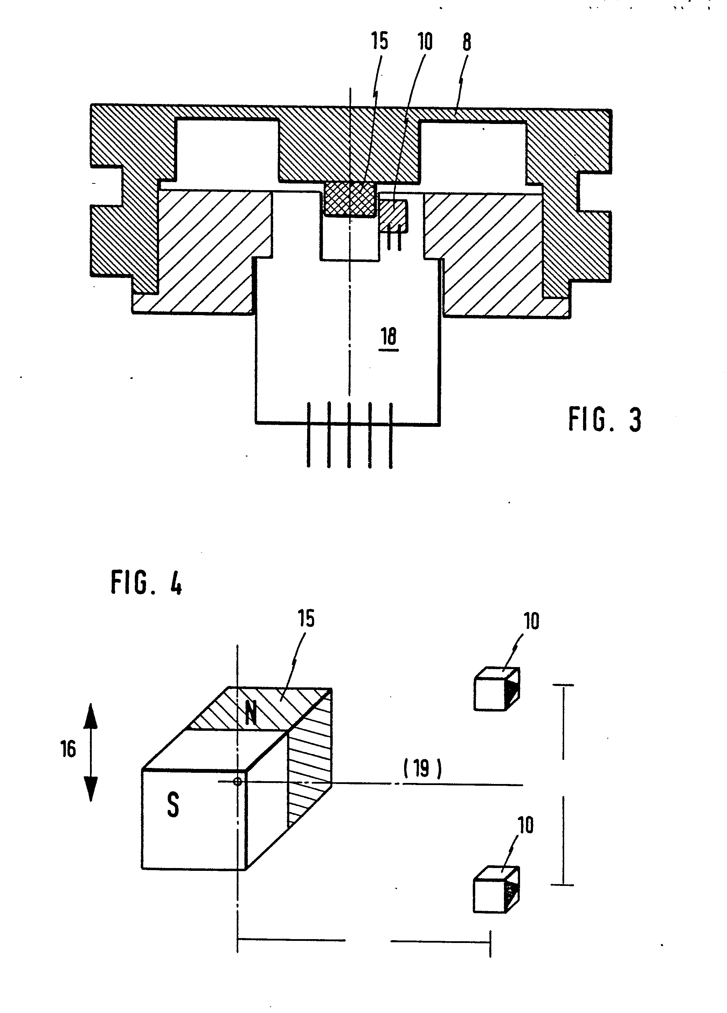

Figur 3 zeigt einen schematischen Querschnitt durch einen Druckaufnehmer. Bei dem ist die eigentliche, aus Aluminium oder Edelstahl bestehende dicke Scheibe kreisringförmig unter Bildung der eigentlichen Membran 8 dünn ausgespart. In dem mittleren Bereich der Membran ist der Magnet 14 angeordnet. Seitlich sind die Hallelemente 10 auf einer Seite des Magneten 14 angeordnet und in einem insgesamt mit 18 bezeichneten Vergußkörper vergossen. Die Anordnung des Magneten 14 und der Hallelemente 10 ist genauer in Fig. 4 in perspektivischer Darstellung gezeigt.

Es ist ersichtlich, daß die beiden Pole des Magneten sich senkrecht zur Schwingungsrichtung 16 erstrecken. Die Hallelemente sind senkrecht zur Verlängerung der beiden Pole des insgesamt quaderförmigen Stabmagneten auf dessen einer Seite 19 in Schwingungsrichtung 16 hintereinander angeordnet, wobei deren aktive Flächen in einer gemeinsamen Ebene liegen, die parallel zur Schwingungsrichtung und senkrecht zur Erstreckung des Stabmagneten 15 verläuft.

**Ansprüche**

I. Druckaufnehmer mit einem metallischen Gehäuse, mit einem abgeschlossenen Druckraum, mit einer diesen vom Aussenbereich abtrennenden und dessen Druck aufnehmende Membran, mit in dem Druckraum angeordneten, dem Druck ausgesetzte Sensoren und mit über in den Druckraum über eine Durchführung, gegebenenfalls druckdicht und elektrisch isoliert hineingeführten Anschlüssen, vorzugsweise aus Metall, die an eine elektrische Auswertschaltung anschließbar sind, **dadurch gekennzeichnet**, daß an der Membran (8) ein im Druckraum (7) befindlicher Stabmagnet (15) angeordnet ist, daß zumindest zwei Sensoren (10) vorgesehen sind, daß jeder Sensor als Hallelement (10) mit einer aktiven Ebene ausgebildet ist sowie mit Spiel bis an den Stabmagnet (15) reicht und daß die zwei Hallelemente (10) in Differentialschaltung hintereinander angeordnet sind.

2. Druckaufnehmer nach Anspruch I, **dadurch gekennzeichnet**, daß die Pole des Stabmagneten (15) linear in Schwingrichtung (16) der Membran (8) hintereinander liegen, daß die beiden Hallelemente bezüglich der Schwingrichtung (16) nebeneinander liegen und daß die aktive Ebene dem Stabmagneten (15) zugewandt ist sowie parallel zur Schwingrichtung (16) verläuft.

3. Druckaufnehmer nach Anspruch I oder 2, **dadurch gekennzeichnet**, daß Hallelemente (10) bezüglich des Stabmagneten (15) diametral gegenüberliegen.

4. Druckaufnehmer nach Anspruch I, 2 oder 3, **dadurch gekennzeichnet**, daß der Stabmagnet (15) in etwa die Länge der Hallelemente (10) aufweist.

5. Druckaufnehmer nach Anspruch 4, **dadurch gekennzeichnet**, daß der Stabmagnet (15) über ein unmagnetisches Zwischenstück (14) an der Membran (8) angeordnet ist.

6. Druckaufnehmer nach einem der Ansprüche I bis 5, **dadurch gekennzeichnet**, daß die Sensoren auf einer Trägerplatte angeordnet sind und diese an ihrer der Membran (8) zugewandten Seite (9) ein die Hallelemente (10) tragendes Trägerteil (17) aufweist.

7. Druckaufnehmer nach Anspruch 6, **dadurch gekennzeichnet**, daß das Trägerteil (17) als Hohlzylinderabschnitt ausgebildet ist und daß an dessen innerem Mantel die Hallelemente angeordnet sind.

8. Druckaufnahmer nach Anspruch 7, **dadurch gekennzeichnet**, daß das Trägerteil (17) aus einem Isolator beispielsweise Epoxyd besteht und aufgebrachte Leiterbahnen zum Anschluß der Hallelemente (10) aufweist.

9. Druckaufnehmer nach Anspruch 8, **dadurch gekennzeichnet**, daß das Trägerteil (17) als kupferkaschiertes Epoxyd oder Glas mit aufgesinterter Metallisierung ausgebildet ist.

10. Druckaufnehmer nach einem der Ansprüche I bis 9, **dadurch gekennzichnet**, daß die Trägerplatte (9) mit den Hallelementen (10) in den Druckaufnehmer (5) einschraubbar ist.

II. Druckaufnehmer nach Anspruch I0, **dadurch gekennzeichnet**, daß die Trägerplatte (9) über ein Feingewinde (I3) einschraubbar ist.

I2. Druckaufnehmer nach einem der Ansprüche I bis II, **dadurch gekennzeichnet**, daß die Hallelemente (I0) beim Einschrauben etwa symmetrisch zu den Polen des Stabmagneten (I5) einjustierbar sind.

I3. Druckaufnehmer nach einem der Ansprüche I bis I2, **dadurch gekennzeichnet**, daß die Pole des Stabmagneten (I5) linear in Schwingrichtung (I6) der Membran (8) hintereinander liegen, daß die beiden Hallelemente bezüglich Schwingrichtung hintereinander sowie neben dem Stabmagnet angeordnet sind und daß die aktiven Ebenen senkrecht zur Schwingrichtung verlaufen und einander nicht zugewandt sind.

I4. Druckaufnehmer nach einem der Ansprüche I bis I3, **dadurch gekennzeichnet**, daß die Pole des Stabmagneten (I5) senkrecht zur Schwingrichtung (I6) angeordnet sind, daß die Hallelemente (I0) in Verlängerung des Stabmagneten auf dessen einer Seite sowie in Schwingrichtung hintereinander angeordnet sind wobei deren aktive Flächen in einer gemeinsamen Ebene liegen, die parallel zur Schwingrichtung und senkrecht zur Erstreckung des Stabmagneten (I5) verläuft.

15. Druckaufnehmer nach Anspruch 14, **dadurch gekennzeichnet**, daß die Pole des Stabmagneten (15) senkrecht zur Schwingrichtung (16) angeordnet sind, daß die Hallelemente um 90° bezüglich der Erstrekkung des Stabmagneten in der senkrecht zur Schwingrichtung verlaufenden Ebene gedreht auf dessen einer Seite sowie in Schwingrichtung hintereinander angeordnet sind, wobei deren aktive Flächen in einer gemeinsamen Ebene liegen, die parallel zur Schwingrichtung und senkrecht zur Erstreckung des Stabmagneten (15) verläuft.

16. Druckaufnehmer nach einem der Ansprüche 1 bis 15, **dadurch gekennzeichnet**, daß die Pole des Stabmagneten (15) senkrecht zur Schwingrichtung (16) angeordnet sind, daß die Hallelemente (10) senkrecht zur Verlängerung des Stabmagneten auf dessen einer Seite sowie in Schwingrichtung hintereinander angeordnet sind, wobei deren aktive Fläche in einer gemeinsamen Ebene liegen, die parallel zur Schwingrichtung und senkrecht zur Erstreckung des Stabmagneten (15) verläuft.

17. Druckaufnehmer nach einem der Ansprüche 1 bis 16, **dadurch gekennzeichnet**, daß die Membran (8) als Kreisringmembran ausgebildet ist.

18. Druckaufnehmer nach Anspruch 17, **dadurch gekennzeichnet**, daß die Membran als dicke Scheibe aus Aluminium oder Edelstahl mit einem kreisringförmigen, dünnen und die eigentliche Membran bildenden Bereich ausgestaltet ist.

FIG. 1

FIG. 2

FIG. 3

**18**

FIG. 4